# EUROPÄISCHE PATENTSCHRIFT

(11) **EP 3 445 209 B1**
(45) Veröffentlichungstag und Bekanntmachung des Hinweises auf die Patenterteilung: **04.03.2020**
(21) Anmeldenummer: 17733048.7
(22) Anmeldetag: 19.04.2017
(51) Int. Cl.: A47C 4/42, A47C 1/14, A47C 7/66, A47C 7/00, E04H 15/06, B60N 2/00, B60R 9/04, B60N 2/30

(54) **TRAGVORRICHTUNG ZUM TRAGEN ZUMINDEST EINER SICH AUF IHR BEFINDLICHEN PERSON**
SUPPORT DEVICE FOR SUPPORTING AT LEAST ONE PERSON LOCATED ON IT
DISPOSITIF PORTEUR POUR PORTER AU MOINS UN INDIVIDU SE TROUVANT SUR LEDIT DISPOSITIF PORTEUR

(30) Priorität: 22.04.2016 IT UA20163364
(43) Veröffentlichungstag der Anmeldung: 27.02.2019
(73) Patentinhaber: Amoriello, Roberto, 39100 Bolzano (BZ) (IT)
(72) Erfinder: Amoriello, Roberto, 39100 Bolzano (BZ) (IT)
(86) Internationale Anmeldenummer: PCT/IT2017/000077
(87) Internationale Veröffentlichungsnummer: WO 2017/183053

(56) Entgegenhaltungen:
- CN-U- 203 244 152
- CN-U- 204 754 424
- GB-A- 1 091 667
- JP-A- H07 279 486

## Beschreibung

### Technisches Gebiet

Die Erfindung betrifft eine Tragvorrichtung zum Tragen zumindest einer sich auf ihr befindlichen Person gemäß dem Oberbegriff des Patentanspruchs 1.

Im Bereich der Reisen bei denen man stets unterwegs ist und die einen touristischen Zweck besitzen, sind verschiedene Ausführungsbeispiele von Tragvorrichtungen zum Tragen zumindest einer sich auf ihnen befindlichen Person bekannt. Der Zweck dieser Tragvorrichtungen besteht darin diesen Personen die Möglichkeit zu gestatten sich in sicherer und zufriedenstellend bequemer Weise auf ihr zusetzen oder hinzulegen, sowohl um wieder zu Kräften zu kommen, z.B. indem man schläft oder sich ausruht, als auch um sich zu unterhalten, z.B. indem man liest, miteinander plaudert oder sich sonnt. Sie ermöglichen daher einen Aufenthalt, sogar einen Aufenthalt mit Übernachtung, sowohl in Orte die geeignet sind Besucher aufzunehmen als auch in Orte die dazu nicht geeignet sind.

Diese bekannten Tragvorrichtungen werden insbesondere in Verbindung mit einem Fahrzeug benutzt, damit es möglich ist sie in jedem Ort zu benutzen in dem das Fahrzeug hält und unter allen bekannten Tragvorrichtungen sind für die vorliegende Erfindung insbesondere jene von Bedeutung die auf dem Dach des Fahrzeuges angeordnet und an der Dachreling oder an dem Dachgepäckträger desselben befestigt sind. Diese bekannten Tragvorrichtungen sind hauptsächlich zweier Bauarten.

Eine erste Bauart stellt den Personen steife Körper zur Verfügung, z.B. Plattformen, Platten und Ähnliches, die als steife Auflagekörper dienen, auf denen die Personen Platz nehmen. Es handelt sich um Tragvorrichtungen die sehr fachmännisch und komplex sind und die eine mühsame Montage auf dem Fahrzeug bzw. Demontage vom Fahrzeug verlangen, auch weil einige ihrer Bestandteile, wie z. B die Platten und die Plattformen, sie sehr schwer und sperrig machen.

Eine zweite Bauart der bekannten Tragvorrichtungen, zu der auch die erfindungsgemäße Tragvorrichtung gehört, ist hingegen leichter und sie weist im Vergleich zur ersten Bauart einfachere Bestandteile und stellt den Personen eine gut gestraffte Plane zur Verfügung. Die Person kann in sichererer Weise Platz auf dieser Plane nehmen, weil die Plane ihrerseits von Schwenkarmen getragen wird, die in einem steifen Rahmen schwenkbar gelagert sind und von zweckmäßigen Festhaltemitteln in Stellung gehalten werden.

### Stand der Technik

Das Dokument CN 203244152 U zeigt eine Tragvorrichtung gemäß dem Oberbegriff des Patentanspruches 1.

Auch das Dokument GB 1091667 A zeigt eine Tragvorrichtung gemäß dem Oberbegriff des Patentanspruches 1.

Beide oben genannte bekannte Tragvorrichtungen weisen die gemeinsame Tatsache auf, dass um ihre Arbeitsstellung zu erreichen ihre Schwenkarme um Achsen schwenken die quer zur Längsachse des steifen Rahmens, d.h. quer zur Fahrtrichtung des Fahrzeuges liegen. Die Schwenkbewegung der Schwenkarme, von der Ruhestellung in die Arbeitsstellung, bringt daher im Vergleich zur Länge die die Tragvorrichtung in der Ruhestellung aufweist eine Verlängerung der Länge der Tragvorrichtung mit sich, aber sie bringt keine Vergrößerung der Breite der Tragvorrichtung mit sich, die unverändert bleibt und mit der Breite des steifen Rahmens mit dem die Tragvorrichtung an dem Fahrzeug befestigt ist übereinstimmt. Da es bei diesen bekannten Tragvorrichtungen unmöglich ist, sie mittels einer Schwenkbewegung ihrer Schwenkarme breiter zu machen, kann die Plane die diese Tragvorrichtungen den Personen zur Verfügung stellen höchstens so breit wie der steife Rahmen sein. Um eine gute Bequemlichkeit zu haben, sind daher steife Rahmen notwendig die ziemlich breit sind, was aber einen Nachteil darstellt, weil um so breiter ist der steife Rahmen um so größer ist sowohl das Ausmaß der Tragvorrichtung, wenn sie sich in der Ruhestellung befindet, als auch das Gewicht der Tragvorrichtung. Es gibt auch noch eine weitere Beschränkung dadurch dass während der Fahrt des Fahrzeuges die Tragvorrichtung, insbesondere der steife Rahmen, aus Sicherheitsgründen nicht seitlich aus dem Fahrzeug vorstehen darf, sodass wenn das Fahrzeug klein und nicht sehr breit ist zwingenderweise auch die Plane klein und nicht sehr breit sein muss.

### Darlegung der Erfindung

Ausgehend vom dargelegten Zusammenhang, besteht die der vorliegenden Erfindung zugrunde liegende Aufgabe in der Weiterentwicklung einer Tragvorrichtung der eingangs erwähnten Art und zwar derart dass sie der zumindest einer Person eine Plane zur Verfügung stellt, derer Breite größer als die Breite des steifen Rahmens der Tragvorrichtung ist.

Erfindungsgemäß wird diese Aufgabe gelöst, wenn eine die im Oberbegriff des Patentanspruches 1 angegebenen Merkmale aufweisende Tragvorrichtung zusätzlich auch die in dem kennzeichnenden Teil des Patentanspruches 1 angegebenen Merkmale aufweist.

Diesen erfindungsgemäß vorgesehenen kennzeichnenden Merkmalen ist es zu verdanken, dass die Schwenkarme um Achsen schwenken die, anders wie die der bekannten Tragvorrichtungen, nicht quer zur Längsachse des steifen Rahmens, d.h. quer zur Fahrtrichtung des Fahrzeuges, angeordnet sind. Bei der Schwenkbewegung der Schwenkarme führen aus diesem Grund ihre freien Enden auch eine seitliche Bewegung aus, d.h. ihre Gesamtbewegung weist eine Verschiebungskomponente auf, die quer zur Längsachse des steifen Rahmens ist. Wenn die Schwenkarme ihre Arbeitsstellung erreicht haben, liegen daher die Projektionen ihrer freien Enden auf der von der Menge der Tragglieder des steifen Rahmens bestimmten Ebene an den Seiten dieser Menge von Tragliedern, d.h. an den Seiten des steifen Rahmens. Diesem Aspekt ist es zu verdanken, dass die Plane, die mit diesen freien Ende verbunden ist, eine Breite aufweisen kann die größer als die Breite des darunterliegenden steifen Rahmens ist. In dem Patentanspruch 2 wird eine einfache, zuverlässige und bevorzugte Ausführungsform der Befestigungsmittel beansprucht, mit denen der steife Rahmen an der Dachreling eines Fahrzeuges befestigt ist.

In dem Patentanspruch 3 wird eine einfache, zuverlässige und bevorzugte Ausführungsform der Festhaltemittel beansprucht, die die Schwenkarme in der Arbeitsstellung festhalten.

Die Merkmale die in dem Patentanspruch 4 beansprucht sind, ermöglichen es in einfacher und zuverlässiger Weise die Plane mit den freien Enden der Schwenkarme zu verbinden.

Die Merkmale die in den Patentansprüchen 5 und 7 beansprucht sind, dienen dazu die Tragvorrichtung zu verstärken, falls auf der Plane Personen Platz nehmen, die besonders korpulent sind.

Falls die in dem Patentanspruch 6 beanspruchten Merkmale vorhanden sind, kann die Plane auch mit den Verstärkungsquerträgern verbunden werden, die in dem Patentanspruch 5 beansprucht sind. Dieser Umstand ermöglicht es eine Plane zu haben die gleichmäßiger gestrafft ist.

Falls die Tragvorrichtung die Merkmale aufweist, die in dem Patentanspruch 8 beansprucht sind, kann man die Stabilität der Tragvorrichtung erhöhen wenn diese nicht an der Dachreling des Fahrzeuges befestigt ist sondern auf dem Boden positioniert wurde. Die Tragvorrichtung ist nämlich selbstgenügsam, d.h. sie kann benutzt werden indem man den steifen Rahmen unmittelbar auf dem Boden legt, nachdem man die Befestigungsmittel gelöst hat, die den steifen Rahmen an dem Fahrzeug befestigen, und den steifen Rahmen vom Dach herabgenommen hat, Man kann also die Tragvorrichtung benutzen indem man sie z.B. auf einem Rasen oder einem Strand positioniert, der sich in der Nähe des Fahrzeuges befindet. Anders ausgedrückt, während der Fahrt auf Straßen wird die Tragvorrichtung auf dem Dach eines Fahrzeuges transportiert und dann, bei einem Halt, kann die Tragvorrichtung entweder auf dem Dach gelassen werden, z.B. um gleich eine gut gestraffte Plane für die Personen zur Verfügung zu haben, oder sie kann vom Dach abgenommen werden und auf dem Boden in der Nähe des Fahrzeuges positioniert werden.

Falls die Tragvorrichtung die Merkmale aufweist, die in dem Patentanspruch 9 beansprucht sind, ist es möglich die Stabilität der Tragvorrichtung zu erhöhen wenn sie nicht an der Dachreling befestigt ist sondern auf dem Boden positioniert wurde.

Falls die Tragvorrichtung die Merkmale aufweist, die in dem Patentanspruch 10 beansprucht sind, dann kann der steife Rahmen auch als Dachgepäckträger dienen, weil in der Ruhestellung die flache und rechteckige Auflageebene benutzt werden kann um Gepäck zu laden.

Falls die Tragvorrichtung die Merkmale aufweist, die in dem Patentanspruch 11 beansprucht sind, dann kann die gut gestraffte Plane der Fußboden einer zeltförmige Konstruktion werden, deren Abdeckplane nach Wunsch eine Schutzplane gegen die Mücken oder gegen das Regen/die Sonne sein kann, oder sie kann sogar als Campingstandplatz dienen auf dem man ein Campingzelt stellen und befestigen kann.

Falls die Tragvorrichtung die Merkmale aufweist, die in dem Patentanspruch 12 beansprucht sind, erreicht man sowohl eine allgemeine Verstärkungswirkung der Festigkeit der Plane als auch - weil man die Fläche in Streifen unterteilt hat, jede von welchen einer Person zugeordnet werden kann - eine örtliche seitliche Abstützung auf beiden Seiten um die Person herum die auf dem jeweiligen Streifen liegt.

### Kurze Beschreibung der Zeichnungen

Weitere Vorteile und Merkmale der Erfindung werden aus der folgenden Beschreibung eines Ausführungsbeispiels der erfindungsgemäßen Tragvorrichtung zum Tragen zumindest einer sich auf ihr befindlichen Person deutlicher sein, das rein beispielhaft und ungefähr, aber bestimmt nicht in einschränkender Weise anhand der beigelegten Zeichnungen erläutert wird. In den Zeichnungen zeigen:
die **Fig. 1** und **2** Draufsichten des steifen Rahmens und der Schwenkarme der erfindungsgemäßen Tragvorrichtung; in den Fig. 1 und 2 befinden sich die Schwenkarme in der Ruhestellung und in der Fig. 2 ist der steife Rahmen an der Dachreling eines Fahrzeuges befestigt;
die **Fig. 3** eine vergrößerte axonometrische Darstellung des Bereichs in dem die Befestigungsmittel wirksam sind;
die **Fig. 4** und **5** nochmals axonometrische Darstellungen des steifen Rahmens und der Schwenkarme; in der Fig. 4 befindet sich ein Schwenkarm in einer Zwischenstellung und die anderen Schwenkarme befinden sich in der Ruhestellung, während in der Fig. 5 alle Schwenkarme sich in der Arbeitsstellung befinden;
die **Fig. 6a** und **6b** eine vergrößerte axonometrische Darstellung eines Lagerelements des steifen Rahmens vor bzw. nach der Schwenkbewegung des jeweiligen Schwenkarmes;
die **Fig. 7** eine der Fig. 5 ähnliche axonometrische Darstellung, wobei aber eine erste Ausführungsform der Plane hinzugefügt wurde;
die **Fig. 8** und **9** jeweils eine axonometrische Darstellung eines Verstärkungsquerträgers alleine und eine der Fig. 5 ähnliche axonometrische Darstellung, wobei aber zwei Verstärkungsquerträger hinzugefügt wurden;
die **Fig. 10** eine der Fig. 7 ähnliche axonometrische Darstellung, wobei aber eine Tragkonstruktion hinzugefügt wurde, die auf der Plane gelagert werden kann und die die Tragkonstruktion für eine Abdeckplane oder die Tragkonstruktion für ein Campingzelt sein kann;
die **fig. 11a** und **11b** vergrößerte axonometrische Darstellungen des Bereichs der Verankerungsbereiche die auf der Plane vorhanden sind und in denen die Tragkonstruktion der Fig. 10 gelagert ist;
die **Fig. 12** eine axonometrische Darstellung des Verbindungsbereichs zwischen einem Verstärkungsquerträger und einer zweiten Ausführungsform der Plane, wobei die Plane mit einem Endaufschlag versehen ist;
die **Fig. 13** und **14** jeweils eine axonometrische Darstellung eines der Haken der Anzahl von Haken mit denen beide Ausführungsformen der Plane auf ihre Unterseite versehen sind und eine Unteransicht der Unterseite die für beide Ausführungsformen der Plane gemeinsam ist;
die **Fig. 15** und **16** jeweils eine der Fig. 9 ähnliche axonometrische Darstellung, wobei aber zwei Verstärkungslängsstangen hinzugefügt wurden, und eine vergrößerte axonometrische Darstellung des Verbindungsbereichs zwischen Schwenkarm und Verstärkungslängsstange;
die **Fig. 17** und **18** jeweils eine axonometrische Darstellung eines Traggliedes des steifen Rahmens an dem Stabilisierungsstäbe angelenkt worden sind, und eine der Fig. 7 ähnliche axonometrische Darstellung, wobei aber die Stabilisierungsstäbe hinzugefügt wurden;
die **Fig. 19** und **20** jeweils eine der Fig. 7 ähnliche axonometrische Darstellung, wobei aber Abstützpflöcke hinzugefügt worden sind, und eine vergrößerte axonometrische Darstellung des Verbindungsbereichs zwischen einem Schwenkarm und einem Abstützpflock.

### Beste Art zur Verwirklichung der Erfindung

In den Figuren wurde eine Tragvorrichtung zum Tragen zumindest einer auf ihr befindlichen Person dargestellt. Sie umfasst einen steifen Rahmen, Befestigungsmittel 2a,2b, eine Anzahl von Schwenkarmen 3, Festhaltemittel 4a,4b und eine Plane 5.

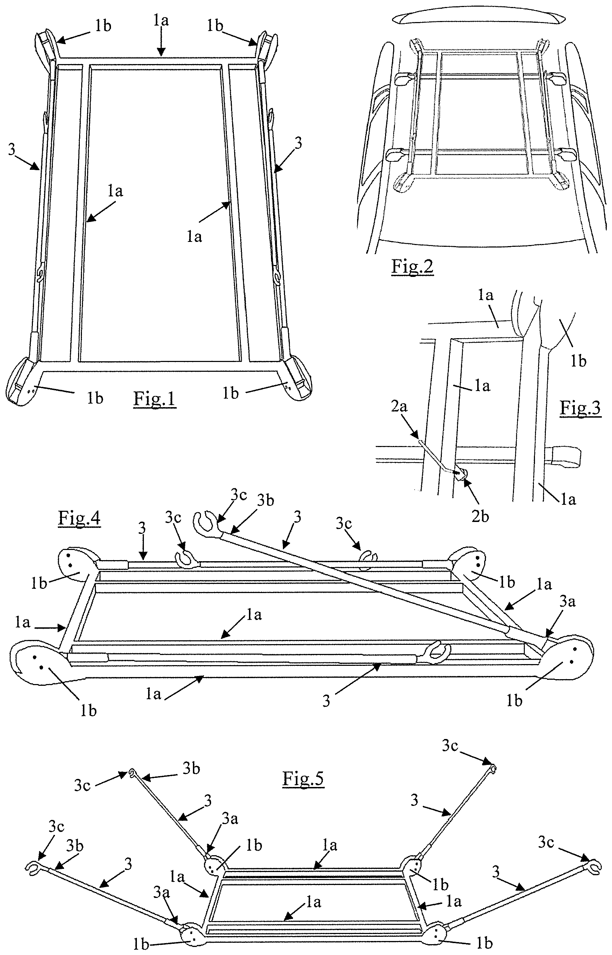

Wie z.B. aus der Figur 1 hervorgeht, umfasst der steife Rahmen eine Anzahl von Traggliedern 1a und eine Anzahl von Lagerelementen 1b. In den Lagerelementen 1b sind andere Bestandteile der Tragvorrichtung gelagert, insbesondere die Schwenkarme 3, und jedes der Lagerelemente 1b ist in steiferweise mit zumindest einem Tragglied 1a verbunden. Wie aus Figur 2 hervorgeht, ist der steife Rahmen außerdem, in bei Bedarf lösbarer Weise und mittels der Befestigungsmittel 2a,2b, an der Dachreling eines Fahrzeuges befestigbar. Der steife Rahmen wird derart an dem Fahrzeug befestigt, dass die Längsachse des steifen Rahmens parallel zur Fahrtrichtung des Fahrzeuges liegt; noch besser wäre es wenn die Längsachse des steifen Rahmens mit der Fahrtrichtung übereinstimmen würde. Die Befestigungsmittel 2a,2b sind bekannt und den Befestigungsmittel ähnlich, die benutzt werden um die steife Rahmen der Dachgepäckträger oder der Skiträger an der Dachreling zu befestigen. Wie z.B. aus Figur 3 hervorgeht, können sie aus einer Anzahl von U-förmigen Elementen 2a und einer Anzahl von Plättchen 2b bestehen. Jedes U-förmige Element 2a schließt in seinem Inneren eine Stange der Dachreling des Fahrzeuges und ein Tragglied 1a des steifen Rahmens ein und ist auf seiner offenen Seite von einem Plättchen 2b verschlossen, das an dem U-förmigen Element 2a verschraubt ist.

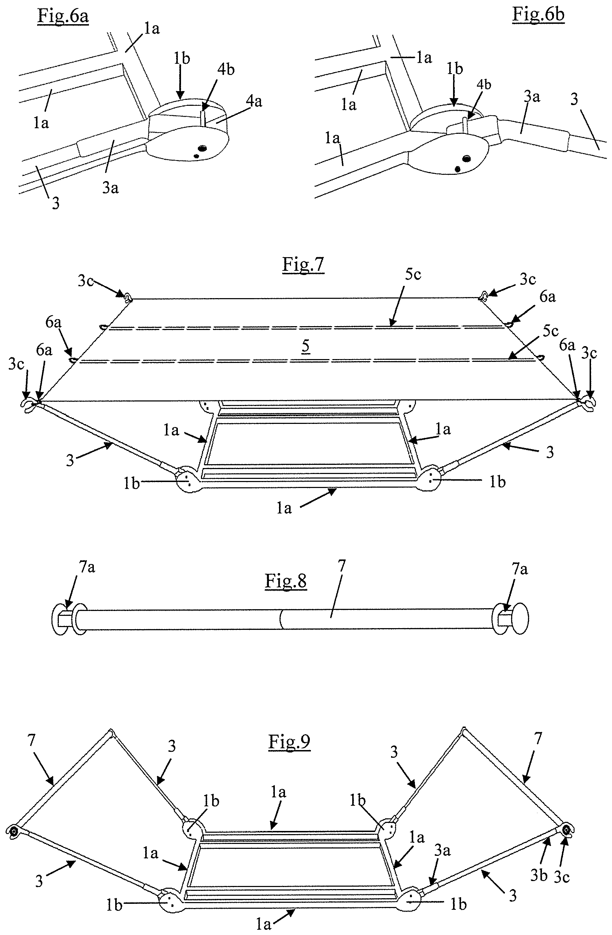

Jeder der Schwenkarme 3 ist an einem seiner Enden 3a in einem dafür vorgesehenen jeweiligen Lagerelement 1b des steifen Rahmens schwenkbar gelagert und er ist aus einer Ruhestellung, die z.B. in Figur 1 dargestellt ist und in der sein anderes Ende 3b - das frei ist - sich in unmittelbarerer Nähe des steifen Rahmens befindet, in eine Arbeitsstellung, die z.B. in Figur 5 dargestellt ist und in der sein freies Ende 3b sich fern von dem steifen Rahmen befindet, und umgekehrt, schwenkbar. Wie man sehr gut in den Figuren 1 und 2 sieht, liegt die Längserstreckungsrichtung jedes Lagerelements 1b nicht parallel zur Längsrichtung des steifen Rahmens und sie liegt daher auch nicht parallel zur Fahrtrichtung des Fahrzeuges. Außerdem, wie man in den Figuren 1, 6a, 6b dargestellt hat, besteht jeder Schwenkarm 3 aus zwei Abschnitten, die gegenseitig derart schräg liegen, dass ein Abschnitt, der kürzere, der das schwenkbar gelagerte Ende 3a aufweist, parallel zur Längsrichtung des Lagerelements 1b liegt und der andere Abschnitt, der längere, der das freie Ende 3b aufweist, parallel zum zugeordneten Tragglied 1a des steifen Rahmens liegt. Die Schwenkung der Schwenkarme 3 in ihre Arbeitsstellung bring daher eine fortlaufende gegenseitige Entfernung ihrer freien Enden 3b mit sich, was eine Vergrößerung der Breite der Tragvorrichtung ermöglicht.

Jeder Schwenkarm 3 ist von Festhaltemittel 4a,4b in seiner Arbeitsstellung festgehalten. Die Festhaltemittel bestehen aus einer Auflagefläche 4a und aus einem Zapfen 4b. Die Auflagefläche 4a ist innerhalb einer in dem jeweiligen Lagerelement 1b vorgesehenen Nut angeordnet, die z.B. in Figur 6a ersichtlich ist, während der Zapfen 4b quer zur Längsrichtung der Nut in die Nut einsteckbar und aus der Nut herausziehbar ist. In Arbeitsstellung liegt der Schwenkarm 3 auf der Auflagefläche 4a auf und ist zwischen der Auflagefläche 4a und dem Zapfen 4b eingeklemmt; man siehe die Figur 6b. Jeder Schwenkarm 3 weist außerdem an seinem freien Ende 3b ein Maul 3c auf, das dazu dient die Plane 5 zu verbinden, wie man erklären wird.

Auf der Plane 5 kann besagte zumindest eine Person in sitzende, hingelegte oder teilweise hingelegte Position Platz nehmen und die Plane 5 weist Verbindungsmittel 6a, mit denen sie 5 mit den freien Enden 3b der Schwenkarme 3 verbindbar ist, damit sie 5, infolge der Schwenkung der Schwenkarme 3 in ihre Arbeitsstellung, gut gestrafft wird.

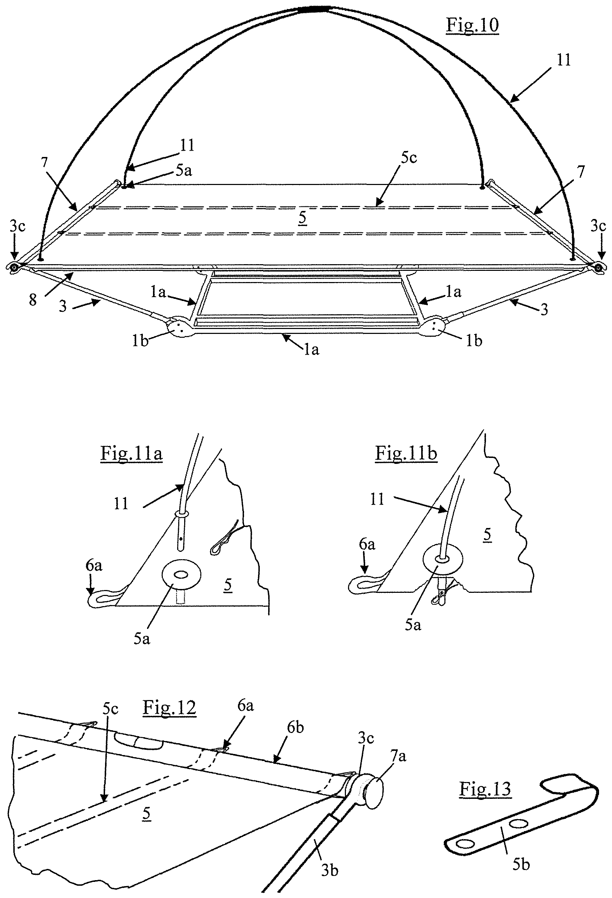

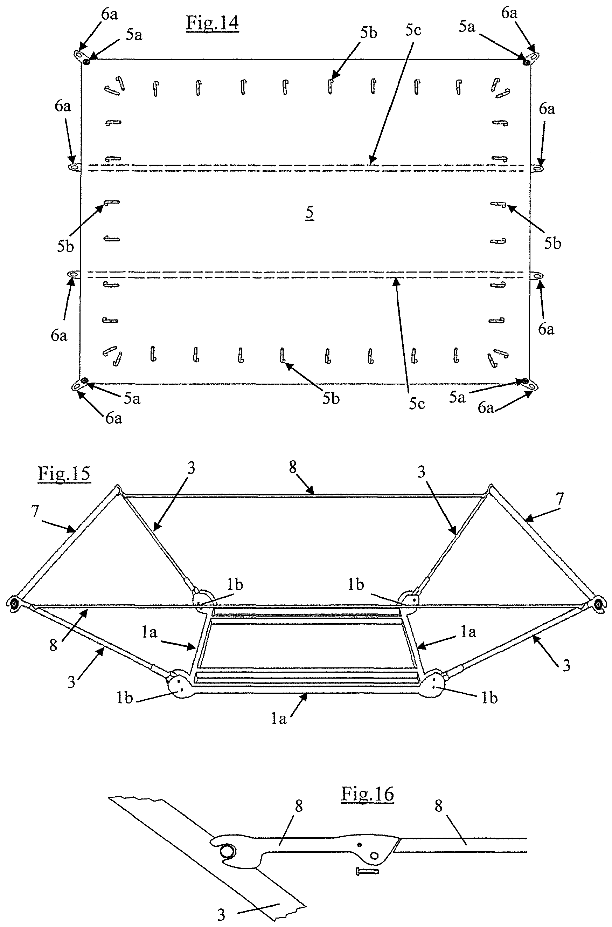

Als Verbindungsmittel 6a kann z.B., wie man in den Figuren 7 und 14 dargestellt hat, eine Anzahl von Ringen 6a dienen, sodass um die Verbindung herzustellen es genügt dass in jedem Maul 3c der Schwenkarme 3 ein Ring 6a eingehängt wird. Die Plane 5 weist außerdem Endaufschläge 6b auf, die benutzt werden falls Verstärkungsquerträger 7 vorgesehen sind, jeder von denen mit seinen zwei Enden 7a in die jeweiligen Maule 3c von zwei Schwenkarmen 3 einsteckbar ist, um die beiden Schwenkarme gegenseitig zu verbinden. In jedem Endaufschlag 6b, man siehe die Figur 12, ist ein Verstärkungsquerträger 7 einsteckbar, bevor die Enden 7a dieses Verstärkungsquerträgers ihrerseits in die jeweiligen Maule 3c der Schwenkarme 3 eingesteckt werden.

Um die Tragvorrichtung zu verstärken, können zusätzlich zu den Verstärkungsquerträgern 7 auch Verstärkungslängsstangen 8 vorgesehenen sein, wie es in den Figuren 15 und 16 ersichtlich ist. Die beiden Enden jeder Verstärkungslängsstange 8 sind dazu bestimmt in der in der Figur 16 dargestellten Weise mit zwei jeweiligen Schwenkarmen 3 verbunden zu werden, um diese beiden Schwenkarme 3 gegenseitig zu verbinden.

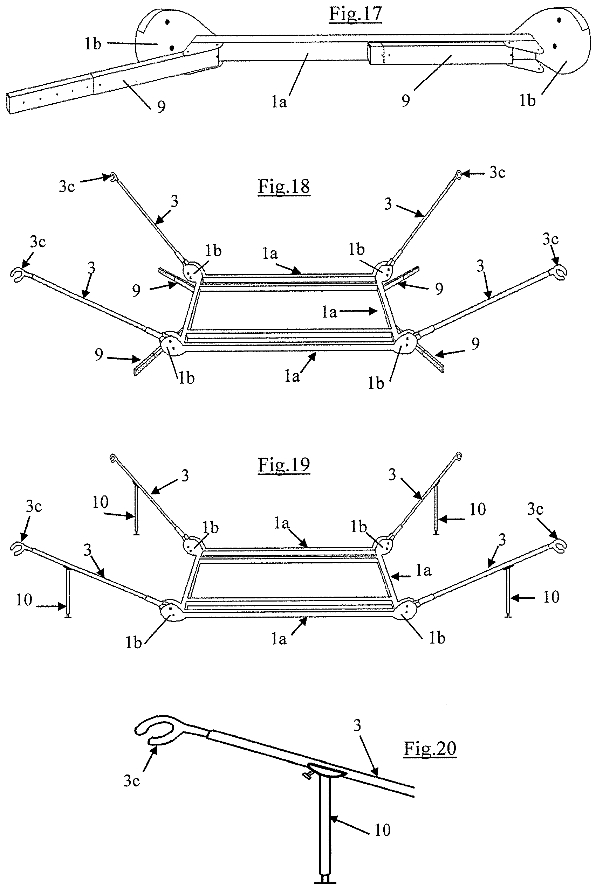

Wie man erwähnt hat, kann die Tragvorrichtung auch auf dem Boden positioniert werden. In diesem Fall ist es zweckmäßig, man siehe die Figuren 17 und 18, eine Anzahl von Stabilisierungsstäben 9 vorzusehen und/oder, man siehe die Figuren 19 und 20, eine Anzahl von Abstützpflöcken 10.

Jede der Stabilisierungsstäbe 9 ist in der Länge verstellbar und schwenkbar an einem Tragglied 1a des steifen Rahmens gelagert, sodass sie von einer unwirksamen Stellung, in der sie sich parallel zum zugeordneten Tragglied 1a des steifen Rahmens erstreckt, in eine wirksame Stellung, in der das freie Ende des Stabilisierungsstabes 9 sich entfernt vom steifen Rahmen befindet, und umgekehrt, schwenkbar ist.

Jeder Abstützpflock 10 ist an einem zugeordneten Schwenkarm 3 befestigbar, z.B. in der in der Figur 20 dargestellten Weise, um eine wirksame Stellung einzunehmen in der das freie Ende des Abstützpflocks 10 sich entfernt vom Schwenkarm 3 befindet. Jeder Abstützpflock 10 ist außerdem in der Länge verstellbar.

Im Fall des in den Figuren dargestellten bevorzugten Ausführungsbeispiels bilden die Tragglieder 1a des steifen Rahmens zweckmäßig eine flache und rechteckige Auflageebene und sowohl die Schwenkarme 3 als auch die Lagerelemente 1b sind vier. Die Lagerelemente 1b befinden sich außerdem zweckmäßig bei den Scheitelpunkten der Auflageebene und die Plane 5 ist rechteckig. In diesem Fall kann die Auflageebene als Dachgepäckträger für das Gepäck benutzt werden.

Die Plane 5 kann außerdem Verankerungsbereiche 5a und Anhängemittel 5b aufweisen. Die Verankerungsbereiche 5a sind nützlich, um in ihnen 5a eine Tragkonstruktion 11 für eine Abdeckungsplane zu verankern, z.B. eine Schutzplane gegen die Mücken oder gegen das Regen/die Sonne. Die Anhängemittel 5b sind nützlich, um die auf der Tragkonstruktion 11 angeordnete Abdeckungsplane anzuhängen. Eine mögliche Tragkonstruktion 11 (die wohl bekannten gekrümmten nach einem Kreuz angeordneten Stäbe) ist in der Figur 10 dargestellt und sie wird in der in den Figuren 11a und 11b dargestellten Weise in den auf der Plane 5 vorgesehenen Verankerungsbereiche 5a verankert.

Bezüglich der Anhängemittel 5b kann es sich um auf die untere Oberfläche der Plane 5 vorhandene Haken handeln, an denen 5b die Ringe angehängt werden können mit denen die Abdeckplane auf ihren Rändern versehen ist. Auf dieser Weise kann die Abdeckplane um die Plane 5 herum gefaltet werden und es gibt keine Öffnungen zwischen der Plane 5 und der Abdeckplane. Alternativ kann die gut gestraffte Plane 5 auch als Standplatz dienen, auf dem man ein bereits montiertes Campingzelt stellt und verankert. Zu diesem Zweck genügt es wenn an den Anhängemitteln 5b die Schnüren und die Ringe des bereits montierten Campingzelt angehängt werden, die im Normalfall an den in den Boden gestoßenen Zeltpflöcken angehängt werden. Die gut gestraffte Plane 5 kann daher, nach Wusch, sowohl als Fußboden für ein Zelt das aus der an den Verankerungsbereichen verankerten Tragkonstruktion 11, aus der Plane 5 selbst und aus der Abdeckungsplane besteht, die auf der Tragkonstruktion 11 angeordnet ist und an den Anhängemitteln 5b angehängt ist als auch als Standplatz auf dem man ein bereits montiertes Campingzelt stellt und anhängt, dienen.

Schließlich kann die Plane 5 eine Anzahl von Verstärkungsstreifen 5c aufweisen, die in den Figuren symbolisch durch gestrichelte Linien dargestellt sind und sich parallel zueinander und mit gegenseitigem Abstand längs der Längserstreckungsrichtung der Plane 5 erstrecken. Jeder Verstärkungsstreifen 5c erstreckt sich zwischen zwei Ringen 6a,um die auf der Plane 5 wirkenden Zugkräften zu bekämpfen und um die Plane örtlich zu verstärken. Die Verstärkungsstreifen 5c unterteilen außerdem die Oberfläche der Plane 5 und begrenzen die verschiedenen Bereiche die den hingelegten Personen zugeordnet sind.

Die Arbeitsweise der Tragvorrichtung ist wie folgt.

Die Tragvorrichtung wird durch die Benutzung der Befestigungsmittel 2a,2b in der üblichen Stellung eines Dachgepäckträgers montiert indem sie an der Dachreling des Fahrzeuges befestigt wird. Auf der flachen und rechteckigen Auflageebene des steifen Rahmens kann ggfs. das Gepäck geladen werden.

Während der Fahrt befinden sich die Schwenkarme 3 in der Ruhestellung und die Plane 5 ist zusammengefaltet und liegt beim Gepäck. Bei einem Halt werden die Ringe 6a der Plane 5 an den jeweiligen Maulen 3c der Schwenkarme 3 angehängt, damit bei der darauffolgenden Schwenkung der Schwenkarme von der Ruhestellung in die Arbeitsstellung die Plane 5 fortlaufend einer Zugkraft ausgesetzt wird. Jeder Schwenkarm 3 wird dann durch die Festhaltemittel 4a,4b in seiner Arbeitsstellung festgehalten. Damit die Festhaltemittel 4a,4b wirksam werden, wird der Zapfen 4b zuerst herausgezogen, um das Anlegen des Schwenkarms 3 an die Auflagefläche 4a zu ermöglichen, und dann wieder eingesteckt, um eine Schwenkbewegung des Schwenkarmes 3 in umgekehrter Richtung, d.h. in Richtung auf seine Ruhestellung, zu verhindern.

Die Schwenkung der Schwenkarme 3 muss nicht unbedingt gleichzeitig erfolgen, vielmehr wird in der Regel aus Bequemlichkeit ein Schwenkarm 3 nach dem anderen in seine Arbeitsstellung geschwenkt und festgehalten. Auf diese Weise erhält man eine gut gestraffte Plane 5 auf der besagte zumindest eine Person Platz nehmen kann.

Um die anfängliche Situation wiederherzustellen, die für die Fahrt geeignet ist, handelt man in umgekehrter Weise, d.h. man zieht die Zapfen 4b heraus, man schwenkt die Schwenkarme 3 in ihre Ruhestellung, man nimmt die Ringe 6a von den jeweiligen Maulen 3c ab, man steckt die Zapfen 4b wieder ein und man legt die Plane 5 wieder beim Gepäck.

Bei Bedarf sind weitere Verbesserungen möglich. Man kann z.B. die Bequemlichkeit erhöhen und die dafür vorgesehene Abdeckplane (Schutzplane gegen die Mücken oder gegen das Regen/die Sonne) hinzufügen, indem die Tragkonstruktion 11 für die Abdeckplane in den Verankerungsbereichen 5a der Plane 5 verankert wird und dann die Ringe der Abdeckungsplane an den Haken 5b der Plane 5 angehängt werden. Alternativ dazu kann man sogar ein bereits montiertes Campingzelt auf der Plane 5 stellen und es dann mittels der Zeltschnüren und der Zeltringen an den Haken 5b anhängen.

Wenn man glaubt, dass die Tragvorrichtung verstärkt werden muss, genügt es zwei Schwenkarme 3 miteinander zu verbinden, indem in ihre Maule 3c die Enden 7a eines Verstärkungsquerträgers 7 eingesteckt werden. In diesem Fall kann man eine zweite Variante der Plane 5 benutzten, die auf einer Seite ein Endaufschlag 6b aufweist in dem ein Verstärkungsquerträger 7 eingesteckt wird. Wenn man noch mehr die Tragvorrichtung verstärken möchte kann man auch zwei Schwenkarme 3 mittels eines Verstärkungslängsstabes 8 miteinander verbinden. Die Anwesenheit einer Plane 5 mit dem Endaufschlag 6b bringt aber, im Vergleich zu dem was zuvor bezüglich der ersten Variante der Plane 5 erläutert wurde, die kein Endaufschlag 6b aufweist, eine kleine Änderung in dem Montagevorgang mit sich.

Im Fall der mit einem Endaufschlag 6b versehenen Plane 5 muss man nämlich berücksichtigen, dass um die beiden Enden 7a des Verstärkungsquerträgers 7 in die Maule 3c von zwei Schwenkarmen 3 einstecken zu können es notwendig ist, dass die beiden Schwenkarme 3 zuvor gänzlich in ihre Arbeitsstellung geschwenkt wurden, damit die beiden freien Enden 3b der zwei Schwenkarme 3 sich um einen Abstand voneinander entfernt haben der der Länge des Verstärkungsquerträger 7 entspricht, der steif ist.

Man handelt daher wie folgt. Man schwenkt zwei auf der gleichen Seite angeordnete Schwenkarme 3 in ihre Arbeitsstellung. Man steckt den Verstärkungsquerträger 7 in dem Endaufschlag 6b ein und man steckt die Enden 7a des Verstärkungsquerträgers 7 in die Maule 3c der zwei Schwenkarme 3. Auf dieser Weise kommt man zu der in der Figur 12 dargestellten Situation. Danach schwenkt man die anderen zwei Schwenkarme 3 in ihre Arbeitsstellung, nachdem man die Ringe 6a der anderen Querseite der Plane 5 an den Maulen 3c dieser anderen zwei Schwenkarme 3 eingehängt hat, in die Maule 3c deren dann die Enden 7a des zweiten Verstärkungsquerträgers 7 positioniert werden. Um auch diesen zweiten Verstärkungsquerträger 7 an der Plane 5 zu binden, werden, z.B. mittels Schnüren, die weitere Ringe 6a an dem zweiten Verstärkungsquerträger 7 befestigt.

Schließlich, falls die Tragvorrichtung auf dem Boden positioniert werden soll, ist es möglich sich an der Bodenausgestaltung anzupassen und die Tragvorrichtung zu stabilisieren, indem man die Stabilisierungsstäbe 9 in ihre wirksamen Stellungen schwenkt oder indem man die Abstützpflöcke 10 an den Schwenkarmen 3 befestigt.

## Patentansprüche

1. Tragvorrichtung zum Tragen zumindest einer auf ihr befindlichen Person, umfassend:
- einen steifen Rahmen, der eine Anzahl von Traggliedern (1a) und eine Anzahl von Lagerelementen (1b) umfasst, wobei in den Lagerelementen (1b) andere Bestandteile (3) der Tragvorrichtung gelagert sind und jedes der Lagerelemente (1b) in steiferweise mit zumindest einem Tragglied (1a) verbunden ist;
- Befestigungsmittel (2a,2b) zum derartigen Befestigen des steifen Rahmens an der Dachreling eines Fahrzeuges, dass die Befestigung bei Bedarf lösbar ist und dass die Längsachse des steifen Rahmens parallel zur Fahrtrichtung des Fahrzeuges liegt;
- eine Anzahl von Schwenkarmen (3), von denen jeder (3) an einem seiner Enden (3a) in einem jeweiligen Lagerelement (1b) des steifen Rahmens schwenkbar gelagert ist und von einer Ruhestellung, in der sein anderes Ende (3b) das frei ist sich in unmittelbarerer Nähe des steifen Rahmens befindet, in eine Arbeitsstellung, in der sein freies Ende (3b) sich fern von dem steifen Rahmen befindet, und umgekehrt, schwenkbar ist;
- Festhaltemittel (4a,4b), zum Festhalten der Schwenkarme (3) in Arbeitsstellung;
- eine Plane (5), auf der besagte zumindest eine Person Platz nehmen kann und die Verbindungsmittel (6a) aufweist, mit denen sie (5) mit den freien Enden (3b) der Schwenkarme (3) verbindbar ist, **dadurch gekennzeichnet dass** die Längserstreckungsrichtung jedes Lagerelements (1b) nicht parallel zur Längsrichtung des steifen Rahmens liegt und dass jeder Schwenkarm (3) aus zwei Abschnitten besteht, die gegenseitig schräg liegen.

2. Tragvorrichtung nach Anspruch 1, **dadurch gekennzeichnet dass** die Befestigungsmittel (2a,2b) aus einer Anzahl von U-förmigen Elementen (2a) und einer Anzahl von Plättchen (2b) bestehen, wobei jedes U-förmige Element (2a) in seinem Inneren eine Stange der Dachreling des Fahrzeuges und ein Tragglied (1a) des steifen Rahmens einschließt und auf seiner offenen Seite von einem Plättchen (2b) verschlossen ist, das an dem U-förmigen Element (2a) verschraubt ist.

3. Tragvorrichtung nach Anspruch 1 oder 2, **dadurch gekennzeichnet dass** die Festhaltemittel (4a,4b) für jeden Schwenkarm (3) aus einer Auflagefläche (4a), die innerhalb einer in dem jeweiligen Lagerelement (1b) vorgesehene Nut angeordnet ist, und einem Zapfen (4b), der quer zur Längsrichtung der Nut in die Nut einsteckbar und aus der Nut herausziehbar ist, bestehen, wobei in Arbeitsstellung der Schwenkarm (3) auf der Auflagefläche (4a) aufliegt und zwischen der Auflagefläche (4a) und dem Zapfen (4b) eingeklemmt ist.

4. Tragvorrichtung nach einem der vorhergehenden Ansprüche, **dadurch gekennzeichnet dass** jeder Schwenkarm (3) an seinem freien Ende (3b) ein Maul (3c) aufweist und dass die Verbindungsmittel (6a) der Plane (5) aus einer Anzahl von Ringen bestehen, wobei in jedem Maul (3c) der Schwenkarme (3) ein Ring (6a) eingehängt ist.

5. Tragvorrichtung nach Anspruch 4, **dadurch gekennzeichnet dass** sie auch Verstärkungsquerträger (7) aufweist, wobei die beiden Enden (7a) jedes Verstärkungsquerträgers (7) in die jeweiligen Maule (3c) von zwei Schwenkarmen (3) einsteckbar sind, um die beiden Schwenkarme (3) gegenseitig zu verbinden.

6. Tragvorrichtung nach Anspruch 5, **dadurch gekennzeichnet dass** die Plane (5) Endaufschläge (6b) aufweist, in jede von denen (6b) ein Verstärkungsquerträger (7) einsteckbar ist, bevor die Enden (7a) dieses Verstärkungsquerträgers ihrerseits in die jeweiligen Maule (3c) der Schwenkarme (3) eingesteckt werden.

7. Tragvorrichtung nach Anspruch 5 oder 6, **dadurch gekennzeichnet dass** sie auch Verstärkungslängsstangen (8) umfasst, wobei die beiden Enden jeder Verstärkungslängsstange (8) dazu bestimmt sind mit zwei jeweiligen Schwenkarmen (3) verbunden zu werden, um diese beiden Schwenkarme (3) gegenseitig zu verbinden.

8. Tragvorrichtung nach einem der vorhergehenden Ansprüche, **dadurch gekennzeichnet dass** sie auch eine Anzahl von Stabilisierungsstäbe (9) aufweist, von denen jede in der Länge verstellbar ist und schwenkbar an einem Tragglied (1a) des steifen Rahmens gelagert ist, sodass sie von einer unwirksamen Stellung, in der sie (9) sich parallel zum zugeordneten Tragglied (1a) des steifen Rahmens erstreckt, in eine wirksame Stellung, in der das freie Ende des Stabilisierungsstabes (9) sich entfernt vom steifen Rahmen befindet, und umgekehrt, schwenkbar ist.

9. Tragvorrichtung nach einem der vorhergehenden Ansprüche, **dadurch gekennzeichnet dass** sie auch eine Anzahl von Abstützpflöcken (10) aufweist, von denen jeder in der Länge verstellbar ist und an einem zugeordneten Schwenkarm (3) befestigbar ist, um eine wirksame Stellung einzunehmen in der das freie Ende des Abstützpflocks (10) sich entfernt vom Schwenkarm (3) befindet.

10. Tragvorrichtung nach einem der vorhergehenden Ansprüche, **dadurch gekennzeichnet dass** die Tragglieder (1a) des steifen Rahmens eine flache und rechteckige Auflageebene bilden, dass sowohl die Schwenkarme (3) als auch die Lagerelemente (1b) vier sind und dass die Lagerelemente (1b) sich bei den Scheitelpunkten der Auflageebene befinden und die Plane (5) rechteckig ist.

11. Tragvorrichtung nach einem der vorhergehenden Ansprüche, **dadurch gekennzeichnet dass** die Plane (5) Verankerungsbereiche (5a) aufweist, um in ihnen (5a) eine Tragkonstruktion (11) für eine Abdeckungsplane zu verankern, und Anhängemittel (5b) an denen die Abdeckungsplane oder ein Zelt angehängt werden kann.

12. Tragvorrichtung nach einem der vorhergehenden Ansprüche, **dadurch gekennzeichnet dass** die Plane (5) eine Anzahl von Verstärkungsstreifen (5c) aufweist, die sich parallel zueinander und mit gegenseitigem Abstand längs der Längserstreckungsrichtung der Plane (5) erstrecken, wobei jeder Verstärkungsstreifen (5c) sich zwischen zwei Ringen (6a) erstreckt.

## Claims

1. Support device for supporting at least one person located on it, comprising:
- a rigid frame, which comprises a plurality of load-bearing elements (1a) and a plurality of supporting elements (1b), in the supporting elements (1b) other components (3) of the support device being supported and each supporting element (1b) being rigidly connected to at least one load-bearing element (1a);
- fixing means (2a,2b) for fixing, in an unlockable way if needed and in a manner that the longitudinal axis of the rigid frame is parallel to the ride direction of the motor vehicle, the rigid frame to the roof bars of a motor vehicle;
- a plurality of rotatable arms (3), each (3) of which is hinged at one of its ends (3a) in a specific supporting element (1b) of the rigid frame and is rotatable from a rest position, in which its other end (3b) which is free is close to the rigid frame, into an operating position, in which its free end (3b) is far from the rigid frame, and vice versa;
- locking means (4a,4b), for locking the rotatable arms (3) in the operating position;
- a cloth (5), on which said at least one person can be supported and which has connection means (6a) by which it (5) is connectable to the free ends (3b), **characterised in that** the direction of longitudinal extension of each supporting element (1b) is not parallel to the longitudinal axis of the rigid frame and **in that** each rotatable arm (3) is made up of two sections inclined with respect to each other.

2. Support device according to claim 1, **characterised in that** the fixing means (2a,2b) consist of a plurality of U-shaped elements (2a) and of a plurality of small plates (2b), each U-shaped element (2a) enclosing a roof bar of the motor vehicle and a load-bearing element (1a) of the rigid frame and being closed on its open side by a small plate (2b) screwed to the U-shaped element (2a).

3. Support device according to claim 1 or 2, **characterised in that** the locking means (4a,4b) for each rotatable arm (3) consist of a resting surface (4a), which is arranged within a groove provided in the respective supporting element (1b), and of a pin (4b), which is insertable into and extractable from the groove transversely with respect to the longitudinal direction of the latter, in the operating position the rotatable arm (3) resting on the resting surface (4a) and being fitted between the resting surface (4a) and the pin (4b).

4. Support device according to one of the previous claims, **characterised in that** each rotatable arm (3) has at its free end (3b) a mouth (3c) and **in that** the connection means (6a) of the cloth (5) consist of a plurality of rings, in each mouth (3c) of the rotatable arms (3) being hooked one ring (6a).

5. Support device according to claim 4, **characterised in that** it also comprises reinforcing crosspieces (7), the two ends (7a) of each reinforcing crosspiece (7) being insertable into the respective mouths (3c) of two rotatable arms (3) to connect the two rotatable arms (3) to each other.

6. Support device according to claim 5, **characterised in that** the cloth (5) has end turn-ups (6b), within each of them (6b) a reinforcing crosspiece (7) is insertable before its ends (7a) are in their turn inserted into the respective mouths (3c) of the rotatable arms (3).

7. Support device according to claim 5 or 6, **characterised in that** it also comprises longitudinal reinforcing rods (8), the two ends of each longitudinal reinforcing rod (8) being intended to be connected to two respective rotatable arms (3) to connect said two rotatable arms (3) to each other.

8. Support device according to one of the previous claims, **characterised in that** it also comprises a plurality of stabilization bars (9), each of which is adjustable in length and is hinged to a load-bearing element (1a) of the rigid frame, so as to be rotatable from an inactive position, in which the stabilization bar (9) extends parallel to the associated load-bearing element (1a) of the rigid frame, into an active position, in which the free end of the stabilization bar (9) extends away from the rigid frame, and vice versa.

9. Support device according to one of the previous claims, **characterised in that** it also comprises a plurality of supporting stakes (10), each of which is adjustable in length and is fixable to an associated rotatable arm (3) to take an active position in which the free end of the supporting stake (10) extends away from the rotatable arm (3).

10. Support device according to one of the previous claims, **characterised in that** the load-bearing elements (1a) of the rigid frame form a flat resting plane having a rectangular plan, **in that** the rotatable arms (3) and the supporting elements (1b) are four and **in that** the supporting elements (1b) are located in correspondence of the vertices of the resting plane and the cloth (5) is rectangular.

11. Support device according to one of the previous claims, **characterised in that** the cloth (5) has anchoring seats (5a), for anchoring in them (5a) a load-bearing structure (11) for a covering cloth, and hooking means (5b) to which the covering cloth or a tent can be hooked.

12. Support device according to one of claims 4 to 11, **characterised in that** the cloth (5) has a plurality of reinforcing strips (5c) which extend parallel to and spaced from each other along the longitudinal dimension of the cloth (5), each reinforcing strip (5c) extending between two rings (6a).

## Revendications

1. Dispositif porteur pour porter au moins un individu se trouvant sur ledit dispositif porteur, comprenant :
- un châssis rigide, lequel comprend une pluralité d'éléments portants (1a) et une pluralité d'éléments de support (1b), dans les éléments de support (1b) étant supportés d'autres composants (3) du dispositif porteur et chacun des éléments de support (1b) étant rigidement relié à au moins un élément portant (1a) ;
- des moyens de fixage (2a,2b) pour fixer, de façon déblocable au besoin et de sorte que l'axe longitudinal du châssis rigide soit parallèle à la direction de la marche du véhicule, le châssis rigide aux barres porte-tout d'un véhicule automobile ;
- une pluralité de bras pivotants (3), chacun (3) desquels est articulé à l'une de ses extrémités (3a) dans un élément de support respectif (1b) du châssis rigide et est pivotant d'une position de repos, où son autre extrémité (3b) qui est libre est proche du châssis rigide, en une position opérationnelle, où son extrémité libre (3b) est éloignée du châssis rigide, et vice-versa ;
- des moyens de blocage (4a,4b), pour bloquer en position opérationnelle les bras pivotants (3) ;
- une toile (5), sur laquelle peut s'installer ladite au moins un individu et laquelle a des moyens de liaison (6a) avec lesquels elle (5) peut être reliée aux extrémités libres (3b) des bras pivotants (3), **caractérisée en ce que** la direction d'extension longitudinale de chaque élément de support (1b) n'est pas parallèle à l'axe longitudinal du châssis rigide et que chaque bras pivotant (3) est composé de deux parties inclinées entre elles.

2. Dispositif porteur selon la revendication 1, **caractérisée en ce que** les moyens de fixage (2a,2b) sont composés d'une pluralité d'éléments en U (2a) et d'une pluralité de plaquettes (2b), chaque élément en U (2a) renfermant à son intérieur une barre porte-tout du véhicule automobile et un élément portant (1a) du châssis rigide et étant fermé sur son côté ouvert par une plaquette (2b) vissée à l'élément en U (2a).

3. Dispositif porteur selon la revendication 1 ou 2, **caractérisée en ce que** les moyens de blocage (4a,4b) pour chaque bras pivotant (3) sont composés d'une surface d'appui (4a), laquelle est disposée dans une rainure prévue dans l'élément de support respectif (1b), et d'un pivot (4b), lequel peut être inséré dans et retiré de la rainure transversalement à sa direction longitudinale, dans la position opérationnelle le bras pivotant (3) s'appuyant sur la surface d'appui (4a) et étant encastré entre la surface d'appui (4a) et le pivot (4b).

4. Dispositif porteur selon une des revendications précédentes, **caractérisée en ce que** chaque bras pivotant (3) a à son extrémité libre (3b) une bouche (3c) et que les moyens de liaison (6a) de la toile (5) sont composés d'une pluralité d'anneaux, dans chaque bouche (3c) des bras pivotants (3) étant accroché un anneau (6a).

5. Dispositif porteur selon la revendication 4, **caractérisée en ce qu'**il comprend en outre des traverses de renforcement (7), les deux extrémités (7a) de chaque traverse de renforcement (7) pouvant être insérées dans les bouches respectives (3c) de deux bras pivotants (3) pour relier entre eux les deux bras pivotants (3).

6. Dispositif porteur selon la revendication 5, **caractérisée en ce que** la toile (5) a des revers d'extrémité (6b), en chacun desquels (6b) une traverse de renforcement (7) peut être insérée avant que les extrémités (7a) de cela viennent à leur tour insérées dans les bouches respectives (3c) des bras pivotants (3).

7. Dispositif porteur selon la revendication 5 ou 6, **caractérisée en ce qu'**il comprend en outre des barres longitudinales de renforcement (8), les deux extrémités de chaque barre longitudinale de renforcement (8) étant destinées à être reliées à deux bras pivotants respectifs (3) pour relier entre eux ces deux bras pivotants (3).

8. Dispositif porteur selon une des revendications précédentes, **caractérisée en ce qu'**il comprend en outre une pluralité de barres de stabilisation (9), chacune desquelles est réglable en longueur et est articulée à un élément portant (1a) du châssis rigide, de façon à être pivotante d'une position inactive, où la barre de stabilisation (9) s'étend parallèlement à l'élément portant associé (1a) du châssis rigide, en une position active, où l'extrémité libre de la barre de stabilisation (9) s'étend en éloignement du châssis rigide, et vice-versa.

9. Dispositif porteur selon une des revendications précédentes, **caractérisée en ce qu'**il comprend en outre une pluralité de potelets d'appui (10), chacun desquels est réglable en longueur et est fixable à un bras pivotant associé (3) pour prendre une position active où l'extrémité libre du potelet d'appui (10) s'étend en éloignement du bras pivotant (3).

10. Dispositif porteur selon une des revendications précédentes, **caractérisée en ce que** les éléments portants (1a) du châssis rigide forment un plan d'appui plat et à plan rectangulaire, que les bras pivotants (3) et les éléments de support (1b) sont quatre et que les éléments de support (1b) se trouvent au niveau des sommets du plan d'appui et la toile (5) est rectangulaire.

11. Dispositif porteur selon une des revendications précédentes, **caractérisée en ce que** la toile (5) a des sièges de fixage (5a), pour fixer en eux (5a) une structure portante (11) pour une toile de couverture, et des moyens d'accrochage (5b) auxquels accrocher la toile de couverture ou une tente de camping.

12. Dispositif porteur selon une des revendications de 4 à 11, **caractérisée en ce que** la toile (5) a une pluralité de bandes de renforcement (5c) qui s'étendent parallèlement et espacées entre elles le long de la dimension longitudinale de la toile (5), chaque bande de renforcement (5c) s'étendant entre deux anneaux (6a).
